# EUROPEAN PATENT SPECIFICATION

(11) **EP 0 610 779 B1**
(45) Date of publication and mention of the grant of the patent: **22.12.1999**
(21) Application number: 94101470.6
(22) Date of filing: 01.02.1994
(51) Int. Cl.: G06F 7/48

(54) **Method and apparatus for generating sticky bit in floating point operation using parallel two-way propagation of group enables**
Anordnung und Verfahren zur Erzeugung des "sticky bits" in Gleitkommaoperation durch Zweirichtungsausbreitung der Gruppenfreigaben
Méthode et dispositif pour la génération de "sticky bit" en opération virgule flottante utilisant la propagation bidirectionelle de validations de groupe

(30) Priority: 10.02.1993 US 16057
(43) Date of publication of application: 17.08.1994
(73) Proprietor: DIGITAL EQUIPMENT CORPORATION, Maynard, MA 01754 (US)
(72) Inventor: Rajagopalan, Vidya, Hudson, Massachusetts 01749 (US)
(74) Representative: Betten & Resch

(56) References cited:
- IBM TECHNICAL DISCLOSURE BULLETIN. vol. 33, no. 1A , June 1990 , NEW YORK US pages 30 - 31 XP000120052 'FAST STICKY BIT DESIGN FOR A 67-BIT ALIGNER IN AN IEEE 754 FLOATING-POINT COPROCESSOR'

## Description

### BACKGROUND OF THE INVENTION

This invention relates to floating point processing in computers, and more particularly to a method and apparatus for calculating the "sticky bit" in floating point operations.

In a floating point processor, the final result of a floating point operation is a rounded quantity which is generated by the application of a rounding algorithm to an intermediate result. For a destination datatype of maximum width n, the task of the rounding algorithm is to convert an intermediate result whose width is possibly greater than n, to a representative quantity of width at most n. In order to produce a correctly rounded result, the values of the round((n+1)th bit), guard(n+2)th bit), and sticky bits must be known. The sticky bit is defined as the logical OR of all bits beyond the guard bit position.

Non-zero bits beyond the guard bit position could be generated as a result of alignment shifts as in the case of add/subtract/convert operations, or by multiply/divide operations. When adding/subtracting two floating-point operands, it is necessary to align (right-shift) the fraction of the smaller operand by an amount determined by they exponent difference of the two operands. The generation of the sticky bit for multiply operations can be mapped to an alignment shift case. This invention describes a technique to detect the sticky bit when generated as a result of alignment.

IBM Technical Disclosure Bulletin, Vol. 23, No. 1A, June 1990, pages 30 - 31, "FAST STICKY BIT DESIGN FOR A 67-BIT ALIGNER IN AN IEEE 754 FLOATING-POINT COPROCESSOR" discloses an aligner which organizes a 67-bit value into eight groups with bits B0-B66 representing the mantissa number and bit B67 being the sticky bit. Shift right bits are used at the bit level as well as at the bit-group level. The logic is based on ORing of the shift control signals instead of the data bits, the OR gate outputs then being processed by three levels of AND/OR circuits to generate a sticky bit output, according to prescribed logic expressions.

### SUMMARY OF THE INVENTION

The invention in its broad form includes a method of calculating a sticky bit in a floating point processor, generally as recited in claim 1. The invention also includes a circuit for calculating a sticky bit in a floating point processor as recited in claim 5.

In accordance with one embodiment of the invention, a floating point processor must recognize the fact that floating point units cannot always generate infinitely precise results, as they are constrained by implementation size to a certain degree of precision. Any result whose width is greater than the maximum allowable width for the given destination datatype format must be rounded and reported. For a datatype of maximum width n, the rounding algorithm needs to know the value of the (n+1)th and (n+2)th bits known as the round and guard bits respectively and in certain rounding schemes such as the IEEE round-to nearest/even (required by IEEE standard 754-1985). It needs information about the existence of any ones in the result beyond the (n+2)th position. The presence of "1's" beyond the (n+2)th position sets the "sticky bit." Sticky bit detection is also required in order to correctly generate results in the case of subtract operations.

As described hereinafter, a method is provided to detect the "sticky bit" when generated as a result of an alignment operation. The detection of the sticky bit is done in parallel with the alignment operation and uses parallel two way propagation of group enables. This scheme is significantly faster than conventional schemes that use serial one-way propagation of group enables.

### BRIEF DESCRIPTION OF THE DRAWINGS

A more detailed understanding of the invention can be had from the following description of a preferred embodiment, given by way of example, and to be understood in conjunction with the following drawings wherein:
Figure 1 is a diagram of a floating point function, according to the prior art;
Figure 2 is an illustration of the content of a number produced by the function in Figure 1;
Figures 3, 4 and 5 are numerical examples of generation of sticky bits for various input values;
Figure 6 is a functional representation of sticky bit generation, according to the prior art;
Figure 7 is a functional representation of sticky bit generation using group enables, according to the prior art;
Figure 8 is a table of values of sticky bit and group enables in the arrangement of Figure 7; and
Figure 9 is an electrical diagram in logic form of sticky bit generation using two-way propagation of group enables, according to one embodiment of the invention.

### DETAILED DESCRIPTION OF SPECIFIC EMBODIMENT

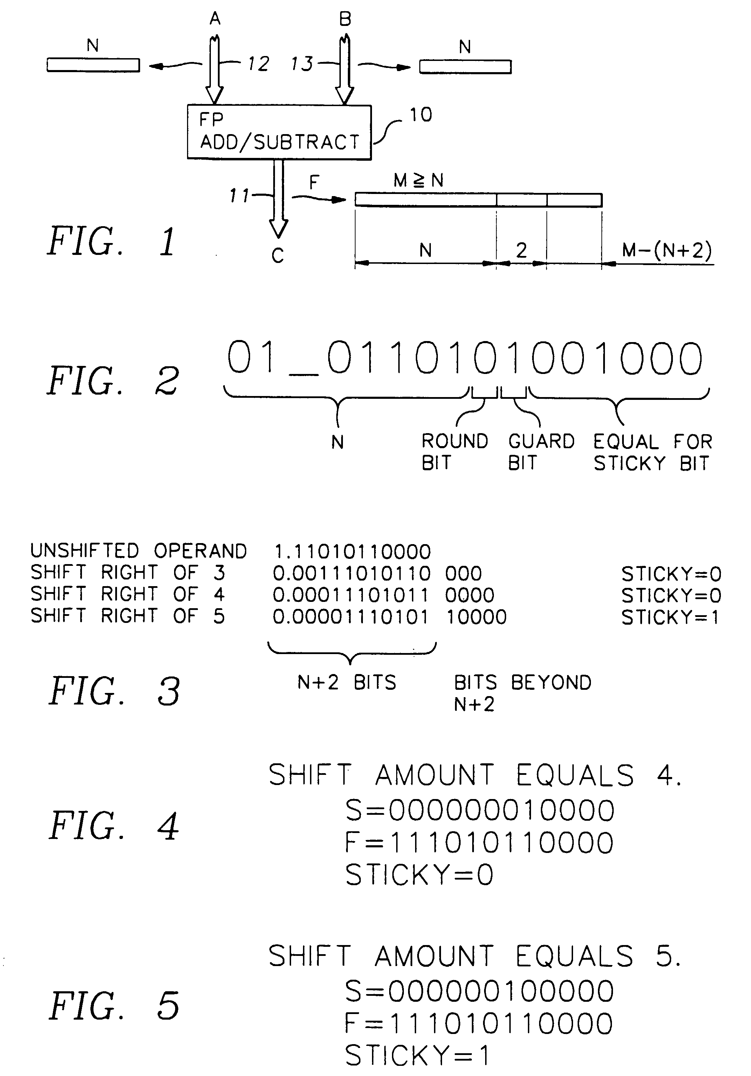

Referring to Figure 1, a floating point operation such as addition/subtraction in a block 10 accepts two n-bit inputs A and B, and produces an output C of width M, where M could be greater than n. This is possible because the floating point representation of a number comprises a fraction "F" of some width "n" and an exponent "E" of some other width "r". In order to add/subtract two floating point numbers, the fraction of the smaller of the two numbers must be aligned with the fraction associated with the larger number. This is achieved by right shifting the fraction associated with the smaller number by an amount determined by the exponent difference of the two numbers. Addition/subtraction of the shifted fraction F_{A} and the unshifted fraction F_{B} therefore can produce a fraction F (at output C) whose width can be greater than that of F_{A} or F_{B}. But the datapaths and registers in the floating point processor are of some nominal width, such as 64-bits, so the output C (greater than 64-bit) must be rounded, producing 64-bit result. For a datatype of maximum width n, the rounding algorithm needs to know the value of the (n+1)th and (n+2)th bits, known as the round and guard bits respectively; in certain rounding schemes such as the IEEE round-to nearest/even (required by IEEE standard 754-1985), it needs information about the existence of any ones in the result beyond the (n+2)th position. Referring to Figure 2, for an 8-bit datapath, the 16-bit output C contains a round-bit at bit-9, a guard-bit at bit-10, and bits 11-16 are examined to see if any "1's" are present. The presence of "1's" beyond the (n+2)th position, i.e.e, beyond bit-10, sets the "sticky bit." However, sticky bit detection is typically performed on the inputs. Referring to Figure 2, sticky bit detection on the output "C" would require a 16-bit datapath, whereas the datapath width need only be 10-bits, in order to generate appropriately rounded results.

Refer to Figure 1: in the case where the output C is generated by adding two fractions F_{A} and F_{B}, where F_{B} has been right shifted by some amount "S" in order to align with fraction F_{A}. The width "N" of the implementation must equal at least (n+2) in order to support the round and guard bits. When operand F_{B} at input 13 is right-shifted by a certain amount, the sticky bit is set if there are any "1's" in F beyond the guard bit position after the shift operation.

For example, referring to Figure 3, consider the 10-bit number 1.110101100. The width of the implementation must equal at least 12-bits (10+2). In a 12-bit (10+2) implementation the number would look like 1.11010110000. The sticky bit is therefore zero for shift amounts <= 4 and is equal to one for shift amounts > 5.

To define terms to be used herein, let us represent a shift amount "p" by the N-bit quantity S = S(N-1)S(N-2)S(N-3)......S(2)S(1)S(0) where all bits in S are zero except for the pth bit position. For example, if N=6, a shift amount of 4 will be represented by 010000. In Figure 3, let F be the N (=n+2) bit representation of the operand in the datapath 13 obtained by padding the operand with two zeros on the right. The sticky bit is set if any bit in F to the right of the "1" in S is one. The definition of sticky bit as used herein is thus:
STKY[i] = logical OR of all bits in F[i] to the right of the "1" in S[i]

Consider the example of Figure 4, where the shift amount equals 4-bits;0 here the sticky bit is 0 as there are no ones in F to the right of the "1" in S. Or, in the example of Figure 5, the sticky bit is "1" because there is a "1" bit in F to the right of the "1" in S.

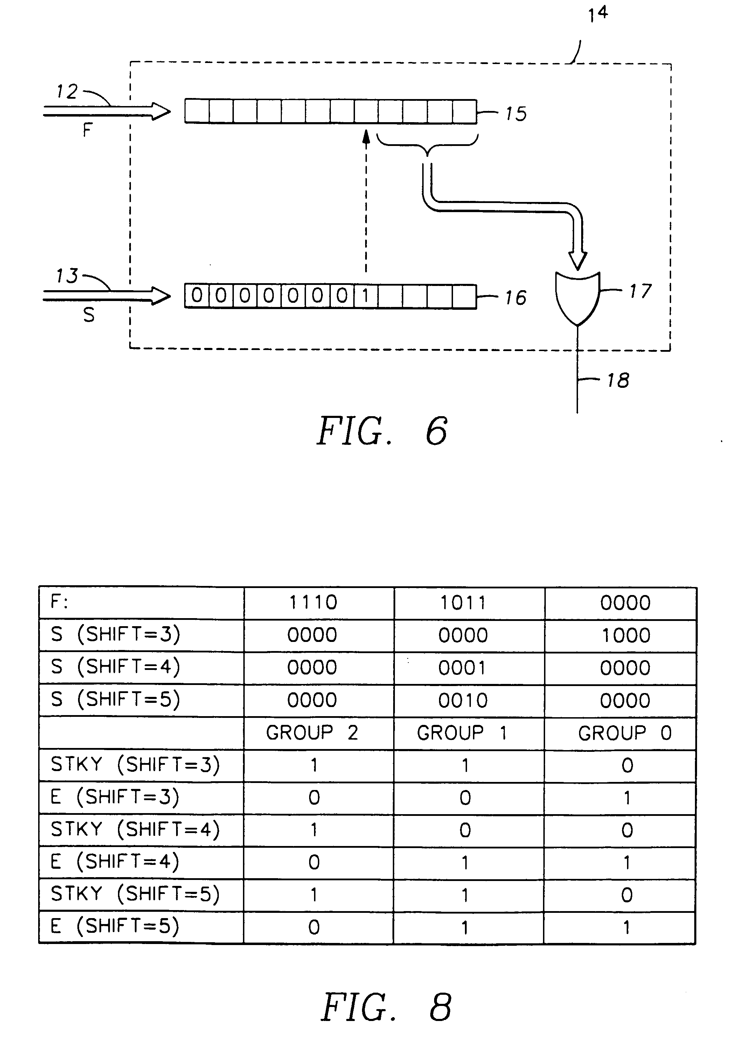

Referring to Figure 6, a scheme for sticky bit detection is to provide the two N bit vectors "F" and "S" as inputs 12 and 13 to the sticky bit logic 14. The sticky bit is computed as the OR of all bits in F register 15 to the right of the "1" in S register 16, using OR gate 17 to produce sticky bit output 18. Note that this is not actually implemented as a simple OR gate, as the position of the "1" in the S vector may vary and therefore, depending upon the position, the number of inputs to the OR gate 17 will vary. Herein this OR-like structure is referred to as a VOR (variable OR gate) and use the symbol of an OR gate to represent it.

Detecting the sticky bit for wide data requires more elaborate implementation. In general, datatypes are wider than 10-bits of the example, and it may be more efficient to use a multi-level OR implementation in place of a single-level OR implementation of Figure 6, as the number of inputs to the VOR gate becomes very large.

In a multilevel implementation, the operation on the N-bit operand F is subdivided into p groups, each of which evaluate in parallel. Let us for the sake of simplicity assume that all the groups have the same number of bits q (q = N/p) and that N is divisible by p. (In certain implementations, it might be advantageous to size the groups differently.)

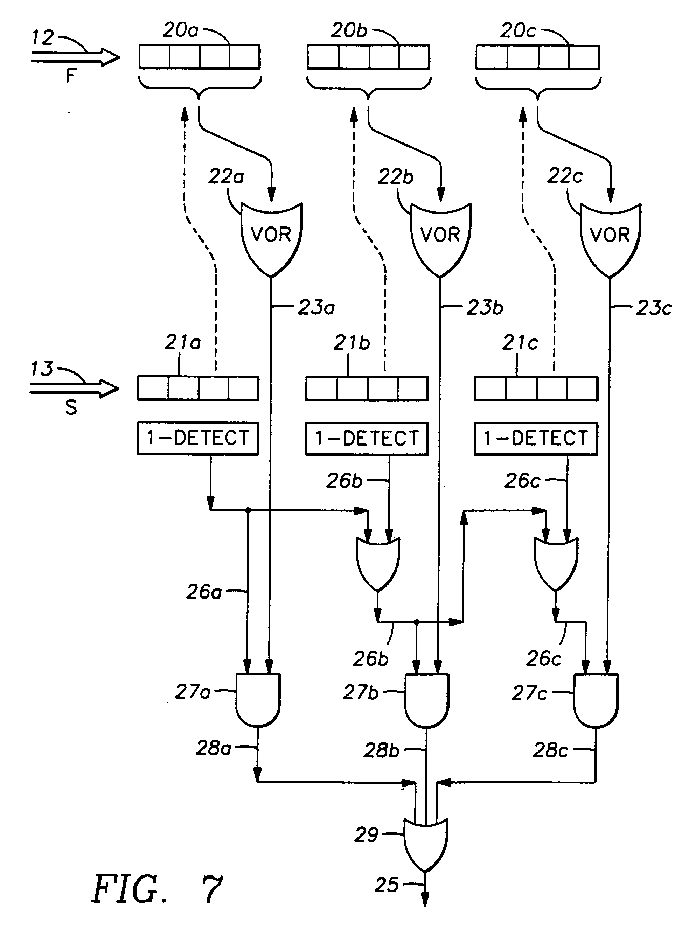

For example, in Figure 7, the F input 12 is applied to three 4-bit registers 20a, 20b and 20c, and the S input is likewise split into three entities 21a, 21b and 21c. A VOR gate 22a, 22b and 22c makes an separate evaluation of each group, based on the S for that group, producing three sticky bit outputs 23a, 23b and 23c. These three bits are combined in a combine circuit described below, producing a single sticky bit output 25.

Thus, a raw sticky bit STKY[i] is computed at outputs 23a, etc., for each group i, based on the earlier definition for the sticky bit, with one exception. When calculating sticky bits on a group-basis, we must now account for groups with all zero "S" vectors 21a, 21b, or 21c. Such groups may or may not contribute to the final sticky bit depending on the position of the "1" in the complete S vector. We initially assume that all such groups contribute to the sticky bit.

Let S[i] and F[i] represent S and F vectors, respectively, for group i:
If S[i] is non-zero:
STKY[i] = logical OR of all bits in F[i] to the right of the "1" in S[i]
If S[i] is all-zero:
STKY[I] = logical OR of all bits in F[i]
That is, if the content of 21c is all zeros, VOR gate 22c looks at all four bits of 20c.

A corrected sticky bit is then evaluated for each group which factors in the actual position of the "1" in the complete S vector. Group i is enabled (i.e., contributes to the final sticky bit) if the "1" in the S vector is in group i or in a group to the left. Group i is disabled if the 1 in the S vector is in a group to the right. In Figure 7, an enable is generated on line 26a if there is a 1 in the corresponding vector 21a, an enable is generated on line 26b if there is a 1 in the corresponding vector 21b, and so on.

The corrected sticky bit for each group is then computed as the logical AND of the raw sticky bit STKY[i] and the enable E[i] for that group. In Figure 7, the output 26c is applied to an AND gate 27c, with the raw sticky bit 23c as the other input, producing a corrected sticky bit on line 28c. The logical OR of all the corrected group sticky bits 28a, 28b, and 28c, in gate 29, gives the final sticky bit output 25.

This operation of Figure 7 may be expressed:
STICKY = E[p-1]STKY[p-1] + E[p-2]STKY[p-2] + ...E[1]STKY[1] + E[0]STKY[0]

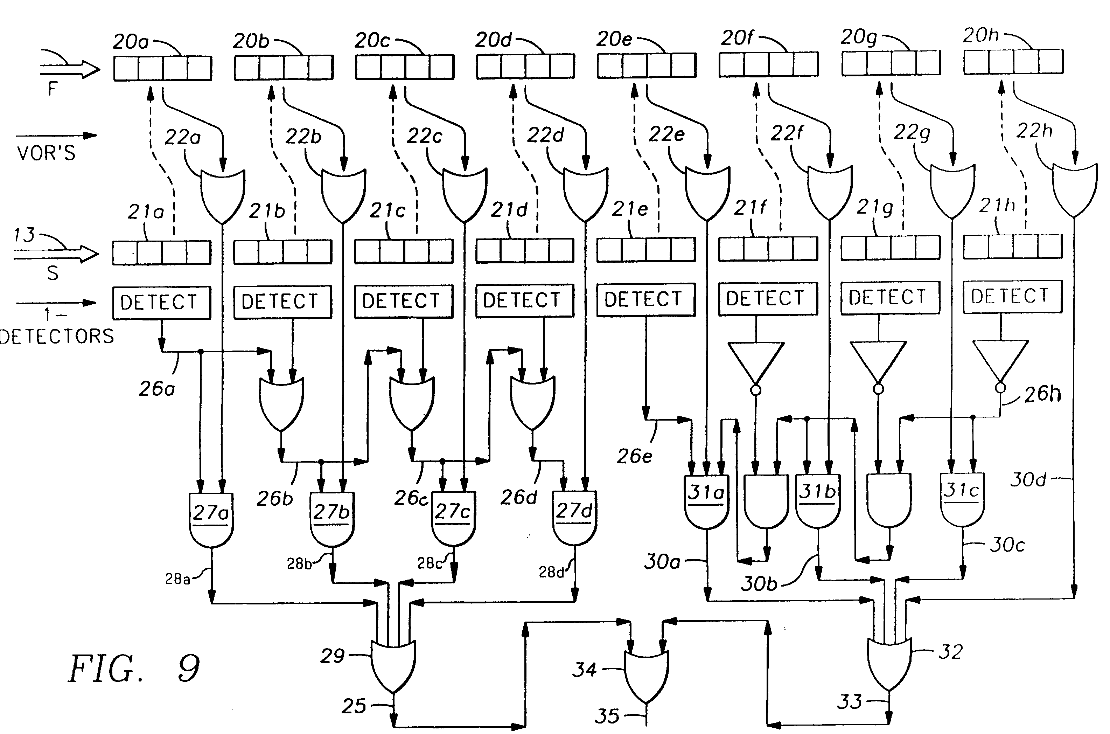

In Figure 8, the example where a 12-bit padded operand F is divided into three groups of 4-bits each is illustrated for a numerical case, for three shifts (3-, 4-, and 5-bit shifts). The group enables E and raw sticky bits STKY are given for each shift amount. In this example:
For a shift of 3:
STICKY = (0.1) + (0.1) + (1.0) = 0
For a shift of 4:
STICKY = (0.1) + (1.0) + (1.0) = 0
For a shift of 5:
STICKY = (0.1) + (1.1) + (1.0) = 1
For each group i let
SNZ[i] = 1 if the S vector for that group is nonzero.
= 0 if the S vector for that group is zero.
Since a group is enabled if the S vector for that group or any group to the left is non-zero, the group enables are generated as the logical OR of the SNZ terms.
E[p-1] = SNZ[p-1]
E[p-2] = SNZ[p-1]+SNZ[p-2]
. . .
E[1] = SNZ[p-1]+SNZ[p-2]+SNZ[p-3]+...SNZ[2]+SNZ[1]
E[0] = SNZ[p-1]+SNZ[p-2]+SNZ[p-3]+ ...SNZ[2]+SNZ[1]+SNZ[0] = 1
The equation for the sticky bit then reduces to:
STICKY = (SNZ[p-1])STKY[p-1] +
(SNZ[p-1]+SNZ[p-2])STKY[p-2] +
·································+
(SNZ[p-1]+SNZ[p-2]+SNZ[p-3]+..SNZ[2])STKY[2]+
(SNZ[p-1]+SNZ[p-2]+SNZ[p-3]+ ..SNZ[2]+SNZ[1])STKY[1]+
STKY[0]
It can be seen from the above expression that some of the factors that determine the speed of calculation of the sticky bit are:
1. Calculation of STKY[i]: This is determined by the number of bits in the group. All the STKY[i] can be calculated in parallel.
2. Calculation of the group enables for the lower order groups. As we progress towards the lower order groups, the number of terms in the OR expression for the group enables increases. The gating factor is the group enable for group 1 which consists of (p-1) terms: i.e., the term
   SNZ[p-1]+SNZ[p-2]_SNZ[p-3]+SNZ[p-4] +SNZ[p-5]+SNZ[p-6]+..SNZ[2]+SNZ[1].

From recognition of these factors, according to the invention, a method of sticky bit detection based on two-way propagation of group enables can be devised. The invention is thus a new scheme for the generation of group enable signals. The S vector is a decoded quantity and contains only a single "1." If there is a "1" in the S vector to the left of bit position k, then all bits k through O in S must be zero.

An alternative to the statement "Group i is enabled if the "1" in the S vector is in group i OR in a group to the left" as used above is the statement "Group i is enabled if the S vectors of ALL groups to the right of group i are zero."

An alternative definition for the group enable vector E[i] can therefore be:
E[i] = 1 if the S vectors for ALL groups to the right of i are zero.
= 0 if the S vector for ANY group to the right of i is nonzero.
For each group i let
SZ[i] = 0 if the S vector for that group is nonzero.
= 1 if the S vector for that group is zero.
It is easily seen that SZ[i] = NOT (SNZ[i]).
The groups enables can be evaluated as the logical AND of the SZ terms:
E[p-1] = SZ[0]SZ[1]SZ[2].....SZ[p-3]SZ[p-2]
E[p-2] = SZ[0]SZ[1]SZ[2].....SZ[p-3]
................... E[0] = 1

We now have two different ways to generate the group enables. A combination of the two schemes can be used in an implementation. Assuming the group enables for the (p-x) groups at the top are generated using first scheme and that the group enables for the x groups at the bottom are generated using the latter scheme, the equation for sticky can be reduced to:
STICKY = (SNZ[p-1])STKY[p-1]+
(SNZ[p-1]+SNZ[p-2])STKY[p-2] +
................................. + (SNZ[p-1]+SNZ[p-2]+SNZ[p-3]+...SNZ[p-x])STKY[p-x]+
SZ[0]SZ[1]SZ[2]SZ[3]....SZ[p-x-2]STKY[p-x-1]+
........................................+
SZ[0])STKY[1]+
STKY[0]

It is usually a convenient tradeoff to choose x = p/2. Under this scheme, the lower order group enables are no longer critical. The group enables with the largest number of terms are now towards the middle. The gating factor in the generation of the group enables is the generation of the expressions
(SNZ[p-1]+SNZ[p-2]+SNZ[p-3]+...SNZ[p/2] and
SZ[0]SZ[1]SZ[2]SZ[3]....SZ[p/2]
which consist of approximately p/2 terms each, which is about half the number of terms in the traditional scheme. The advantage of this method is that the group enables for the p-x upper groups can be generated in parallel with the group enables for the x lower groups.

In Figure 9, an example of implementing this method of parallel two-way propagation of group enables is illustrated. The input F is broken into eight 4-bit values 20a-20h, for p = 32. Likewise S is in eight 4-bit values 21a-21h. The value p/2 is thus 16-bits. All of the groups to the left of p/2 are evaluated in the same manner as in Figure 6. Group enables are generated on lines 26a, etc., as inputs to AND gates 27a, etc. To the right of p/2, the corrected sticky bits 30a, 30b, 30c and 30d are the logical AND provided by gates 31a, 31b, and 31c plus the value 26h, derived as explained above from the indications of whether the values 21e-21h contain a "1." An OR gate 32 produces a sticky bit output 33, which is ORed with the output of gate 29 to produce an overall sticky-bit output 35.

In comparison with the traditional approach, this method of this invention can evaluate the group enables twice as fast. As the speed of the sticky bit calculation is determined partly by the group enables, this results in a significant performance gain in the overall sticky bit calculation.

The parallel two-way propagation scheme helps speed up the computation of the group enables by a factor of two, i.e., 100%. Under the traditional scheme for the generation of group enables, any speedup could be attained only at the cost of additional chip area. The new scheme provides a fast and area-wise efficient scheme for the generation of the sticky bit.

While the invention has been described with reference to a specific embodiment, the description is not meant to be construed in a limiting sense. Various modifications of the disclosed embodiment, as well as other embodiments of the invention, will be apparent to persons skilled in the art upon reference to this description. It is therefore contemplated that any such modifications or embodiments should fall within the scope of the invention as claimed.

## Claims

1. A method of calculating a sticky bit in a floating point processor, comprising the steps of:
dividing an input value (F) into M groups of bits;
providing a shift by an amount of S bits where all bits of S are zero except a one for the position representing a number of bits said input value has to be shifted;
dividing (21a-21h) said amount S into M groups, each being called an S-vector, corresponding to said M groups of bits of said divided input value;
making a first determination (1-DETECTORS) for each of said S-vectors whether or not a "1" appears therein to produce a group one-detect signal associated with a respective one of said M groups of bits;
making a second determination (22a - 22h) for each group of said M groups of bits, if there is a "1" in the group of bits to the right of a bit corresponding to the bit position containing a "1" in the S-vector associated with that said group;
characterized by
generating (26a - 26d) for each of the M-x high-order ones of said M groups of bits, a group enable signal (26a - 26d) determined by whether the group one detect signal appears in the S vector associated with that group or in any S-vector associated with a group of said M-x high-order groups of bits above that group ;
generating for each of the x low-order ones of said M groups of bits (20e - 20h), a group enable signal (26e - 26h) determined by whether said group one-detect signal is not present in any low-order group of bits to the right of that group;
for each of the M groups of bits, generating (27, 31) a respective group sticky bit signal based on the results of said second determination (23) for that group of bits, in conjunction with the existence of a group enable signal (26) for that group of bits; and
generating (29, 32, 34) an overall sticky bit indication (35) from all of said group sticky bit signals.

2. A method according to claim 1 wherein said input value is divisible by two.

3. A method according to claim 2 wherein said high-order ones of said M groups of bits (20a - 20d) and said low-order ones of said M groups of bits (20e - 20h) are equal in number.

4. A method according to claim 1 wherein said steps of generating are performed simultaneously.

5. A circuit for calculating a sticky bit in a floating point processor, comprising:
means (20a - 20h) for dividing an input value into M groups of bits;
means for providing a shift amount S bits where all bits of S are zero except a "1" at the position representing a number of bits said input value has been shifted;
means for dividing (21a-21h) said amount S into M groups, each being called an S-vector, corresponding to said M groups of bits of said divided input value;
detector means (1-DETECTORS) for making a first determination for each of said S-vectors whether or not a "1" appears therein to produce a group one-detect signal for said M group of bits associated with that S-vector;
comparison means (14) for making a second determination (22a - 22h) for each group of said M groups of bits, if there is a "1" in the group of bits to the right of a bit corresponding to the bit position containing a "1" in the S-vector associated with that said group; characterized by
first means receiving inputs from said detector means (1-DETECTORS) for generating for each of the M-x high-order ones of said M groups of bits, a group enable signal (26a - 26d) determined by whether the group one detect signal appears in the S-vector associated with that group or in any S-vector associated with a group of said M-x high-order groups of bits above that group;
second means receiving inputs from said detector means (1-DETECTORS) for generating for each of the x low-order ones of said M groups of bits (20e - 20h), a group enable signal (26e - 26h) determined by whether said group one-detect signal is not present in any low-order group of bits to the right of that group;
for each of the M groups of bits, logic circuitry (27, 31) coupled to receive inputs from said first means, from said second means, and from said comparison means (14) for generating a respective corrected sticky bit signal (28a -28d; 30a - 30b) for each of said M groups of bits; and
output logic circuitry (29, 32, 34) for generating an overall sticky bit indication (35) from all of said corrected sticky bit signals.

6. A circuit according to claim 5 wherein said input value is divisible by two.

7. A circuit according to claim 6 wherein said high-order ones of said M-x groups of bits and said low-order ones of said x groups of bits are equal in number.

8. A circuit according to claim 5 wherein said first and second means are operable to generate said group enable signals simultaneously.

## Patentansprüche

1. Verfahren zum Berechnen eines Sticky-Bits in einem Gleitkommaprozessor, mit den folgenden Schritten:
Unterteilen eines Eingangswertes (F) in M Bitgruppen;
Ausführen einer Verschiebung um einen Betrag von S Bits, wobei alle S Bits mit Ausnahme eines einzigen für die Position, die die Anzahl von Bits repräsentiert, deren Eingangswert verschoben werden soll, null sind;
Unterteilen (21a-21h) des Betrages S in M Gruppen, wovon jede ein S-Vektor genannt wird, die den M Bitgruppen des unterteilten Eingangswertes entsprechen;
Ausführen einer ersten Feststellung (1-DETECTORS) für jeden der S-Vektoren, ob darin eine "1" auftritt, um ein Gruppe-eins-Erfassungssignal zu erzeugen, das einer entsprechenden der M Bitgruppen zugeordnet ist;
Ausführen einer zweiten Feststellung (22a-22h) für jede der M Bitgruppen, ob in der Bitgruppe rechts von einem Bit, das der Bitposition entspricht, die in dem dieser Gruppe zugeordneten S-Vektor eine "1" enthält, eine "1" vorhanden ist;
gekennzeichnet durch
für jede der M-x Bitgruppen hoher Ordnung der M Bitgruppen Erzeugen (26a-26d) eines Gruppenfreigabesignals (26a-26d), das dadurch bestimmt ist, ob das Gruppe-eins-Erfassungssignal in dem dieser Gruppe zugeordneten S-Vektor oder in irgendeinem S-Vektor, der einer Gruppe der M - x Bitgruppen hoher Ordnung oberhalb dieser Gruppe zugeordnet ist, auftritt;
für jede der x Gruppen niedriger Ordnung der M Bitgruppen (20e-20h) Erzeugen eines Gruppenfreigabesignals (26e-26h), das dadurch bestimmt ist, ob das Gruppe-eins-Erfassungssignal in keiner Bitgruppe niedriger Ordnung rechts von dieser Gruppe vorhanden ist;
für jede der M Bitgruppen Erzeugen (27, 31) eines jeweiligen Gruppen-Sticky-Bit-Signals anhand der Ergebnisse der zweiten Feststellung (23) für diese Bitgruppe in Verbindung mit dem Vorhandensein eines Gruppenfreigabesignals (26) für diese Bitgruppe; und
Erzeugen (29, 32, 34) einer Gesamt-Sticky-Bit-Angabe (35) aus sämtlichen Gruppen-Sticky-Bit-Signalen.

2. Verfahren nach Anspruch 1, bei dem der Eingangswert durch zwei teilbar ist.

3. Verfahren nach Anspruch 2, bei dem die Anzahl der Gruppen hoher Ordnung der M Bitgruppen (20a-20d) und die Anzahl der Gruppen niedriger Ordnung der M Bitgruppen (20e-20h) gleich sind.

4. Verfahren nach Anspruch 1, bei dem die Erzeugungsschritte gleichzeitig ausgeführt werden.

5. Schaltung zum Berechnen eines Sticky-Bits in einem Gleitkommaprozessor, mit:
einer Einrichtung (20a-20h) zum Unterteilen eines Eingangswertes in M Bitgruppen;
einer Einrichtung zum Schaffen eines Verschiebungsbetrages von S Bits, wobei sämtliche S Bits mit Ausnahme einer "1" an der Position, die eine Anzahl von Bits repräsentiert, um die der Eingangswert verschoben worden ist, null sind;
einer Einrichtung zum Unterteilen (21a-21h) des Betrages S in M Gruppen, wovon jede ein S-Vektor genannt wird, die den M Bitgruppen des unterteilten Eingangswertes entsprechen;
einer Detektoreinrichtung (1-DETECTORS) zum Ausführen einer ersten Feststellung für jeden der S-Vektoren, ob darin eine "1" auftritt, um ein Gruppe-eins-Erfassungssignal für die M Bitgruppen, das diesem S-Vektor zugeordnet ist, zu erzeugen;
einer Vergleichseinrichtung (14) zum Ausführen einer zweiten Feststellung (22a-22h) für jede Gruppe der M Bitgruppen, ob in der Bitgruppe rechts von einem Bit, das der Bitposition entspricht, die in dem dieser Gruppe zugeordneten S-Vektor eine "1" enthält, eine "1" vorhanden ist; gekennzeichnet durch
eine erste Einrichtung, die von der Detektoreinrichtung (1-DETECTORS) Eingangssignale empfängt, um für jede der M - x Gruppen höherer Ordnung der M Bitgruppen ein Gruppenfreigabesignal (26a-26d) zu erzeugen, das dadurch bestimmt ist, ob das Gruppe-eins-Erfassungssignal in dem dieser Gruppe zugeordneten S-Vektor oder in irgendeinem S-Vektor, der einer Gruppe der M - x Bitgruppen hoher Ordnung oberhalb dieser Gruppe zugeordnet ist, auftritt;
eine zweite Einrichtung, die Eingangssignale von der Detektoreinrichtung (1-DETECTORS) empfängt, um für jede der x Bitgruppen niedriger Ordnung der M Bitgruppen (20e-20h) ein Gruppenfreigabesignal (26e-26h) zu erzeugen, das dadurch bestimmt ist, ob das Gruppe-eins-Erfassungssignal in keiner Bitgruppe niedriger Ordnung rechts von dieser Gruppe vorhanden ist;
eine Logikschaltungsanordnung (27, 31) für jede der M Bitgruppen, die so angeschlossen ist, daß sie von der ersten Einrichtung, von der zweiten Einrichtung und von der Vergleichseinrichtung (14) Eingangssignale empfängt, um ein entsprechendes korrigiertes Sticky-BitSignal (28a-28d; 30a-30b) für jede der M Bitgruppen zu erzeugen; und
eine Ausgangslogikschaltungsanordnung (29, 32, 34) zum Erzeugen einer Gesamt-Sticky-Bit-Angabe (35) aus sämtlichen korrigierten Sticky-Bit-Signalen.

6. Schaltung nach Anspruch 5, bei der der Eingangswert durch zwei teilbar ist.

7. Schaltung nach Anspruch 6, bei der die Bitgruppen hoher Ordnung der M - x Bitgruppen und die Bitgruppen niedriger Ordnung der x Bitgruppen der Anzahl nach gleich sind.

8. Schaltung nach Anspruch 5, bei der die erste und die zweite Einrichtung so betreibbar sind, daß sie die Gruppenfreigabesignale gleichzeitig erzeugen.

## Revendications

1. Procédé de calcul d'un bit adhérent dans un processeur en virgule flottante, comprenant les étapes consistant :
à diviser une valeur d'entrée (F) en M groupes de bits ;
à établir un décalage d'une quantité de S bits avec tous les bits de S égaux à zéro à l'exception d'un un à la position représentant un nombre de bits dont ladite valeur d'entrée doit être décalée ;
à diviser (21a-21h) ladite quantité S en M groupes, chacun étant dénommé vecteur de S, correspondant auxdits M groupes de bits de ladite valeur d'entrée divisée ;
à opérer une première détermination (DÉTECTEURS DE 1) pour chacun desdits vecteurs de S qu'un "1" y apparaisse ou non, de manière à produire un signal de détection de un de groupe associé à l'un respectif desdits M groupes de bits ;
à opérer une seconde détermination (22a-22h) pour chaque groupe desdits M groupes de bits, si est présent un "1" dans le groupe de bits à la droite d'un bit correspondant à la position de bit contenant un "1" dans le vecteur de S associé à ce dit groupe ;
caractérisé par les étapes consistant
à générer (26a-26d) pour chacun des M-x groupes d'ordre supérieur desdits M groupes de bits, un signal de validation de groupe (26a-26d) déterminé par le fait que le signal de détection de un de groupe apparaît dans le vecteur de S associé à ce groupe ou dans un quelconque vecteur de S associé à un groupe desdits M-x groupes de bits d'ordre supérieur au-dessus de ce groupe;
à générer pour chacun des x groupes d'ordre inférieur desdits M groupes de bits (20a-20h), un signal de validation de groupe (26e-26h) déterminé par le fait que ledit signal de détection de un de groupe n'apparaît dans aucun groupe de bits d'ordre inférieur à la droite de ce groupe ;
pour chacun des M groupes de bits, à générer (27, 31) un signal de bit adhérent de groupe respectif sur la base des résultats de ladite seconde détermination (23) pour ce groupe de bits, conjointement avec l'existence d'un signal de validation de groupe (26) pour ce groupe de bits ; et
à générer (29, 32, 34) un indication globale des bits adhérents (35) à partir de tous lesdits signaux de bits adhérents de groupe.

2. Procédé selon la revendication 1, dans lequel ladite valeur d'entrée est divisible par deux.

3. Procédé selon la revendication 2, dans lequel lesdits groupes d'ordre supérieur desdits M groupes de bits (20a-20d) et lesdits groupes d'ordre inférieur desdits M groupes de bits (20e-20h) sont présents en nombre égal.

4. Procédé selon la revendication 1, dans lequel lesdites étapes de génération sont accomplies simultanément.

5. Circuit de calcul d'un bit adhérent dans un processeur en virgule flottante, comprenant :
des moyens (20a-20h) pour diviser une valeur d'entrée en M groupes de bits ;
des moyens pour établir un décalage d'une quantité de S bits avec tous les bits de S égaux à zéro à l'exception d'un "1" à la position représentant un nombre de bits dont ladite valeur d'entrée a été décalée;
des moyens pour diviser (21a-21h) ladite quantité S en M groupes, chacun étant dénommé vecteur de S, correspondant auxdits M groupes de bits de ladite valeur d'entrée divisée ;
des moyens détecteurs (DÉTECTEURS DE 1) pour opérer une première détermination pour chacun desdits vecteurs de S qu'un "1" y apparaisse ou non, de manière à produire un signal de détection de un de groupe pour lesdits M groupes de bits associés à ce vecteur de S ;
des moyens de comparaison (14) pour opérer une seconde détermination (22a-22h) pour chaque groupe desdits M groupes de bits, si est présent un "1" dans le groupe de bits à la droite d'un bit correspondant à la position de bit contenant un "1" dans le vecteur de S associé à ce dit groupe ; caractérisé par
des premiers moyens recevant des signaux d'entrée en provenance desdits moyens détecteurs (DETECTEURS DE 1) pour générer pour chacun des M-x groupes d'ordre supérieur desdits M groupes de bits, un signal de validation de groupe (26a-26d) déterminé par le fait que le signal de détection de un de groupe apparaît dans le vecteur de S associé à ce groupe ou dans un quelconque vecteur de S associé à un groupe desdits M-x groupes de bits d'ordre supérieur au-dessus de ce groupe ;
des seconds moyens recevant des signaux d'entrée en provenance desdits moyens détecteurs (DÉTECTEURS DE 1) pour générer pour chacun des x groupes d'ordre inférieur desdits M groupes de bits (20a-20h), un signal de validation de groupe (26e-26h) déterminé par le fait que ledit signal de détection de un de groupe n'apparaît dans aucun groupe de bits d'ordre inférieur à la droite de ce groupe ;
pour chacun des M groupes de bits, des circuits logiques (27, 31) couplés pour recevoir des signaux d'entrée en provenance desdits premiers moyens, desdits seconds moyens et desdits moyens de comparaison (14) de manière à générer un signal de bit adhérent corrigé respectif (28a-28d ; 30a-30b) pour chacun desdits M groupes de bits ; et
des circuits logiques de sortie (29, 32, 34) pour générer une indication globale des bits adhérents (35) à partir de tous lesdits signaux de bits adhérents corrigés.

6. Circuit selon la revendication 5, dans lequel ladite valeur d'entrée est divisible par deux.

7. Circuit selon la revendication 6, dans lequel lesdits groupes d'ordre supérieur desdits M-x groupes de bits et lesdits groupes d'ordre inférieur desdits x groupes de bits sont présents en nombre égal.

8. Circuit selon la revendication 5, dans lequel lesdits premiers et seconds moyens peuvent être mis en oeuvre pour générer simultanément lesdits signaux de validation de groupe.
